# EUROPEAN PATENT SPECIFICATION

(11) **EP 1 267 684 B1**
(45) Date of publication and mention of the grant of the patent: **17.05.2006**
(21) Application number: 01914009.4
(22) Date of filing: 15.03.2001
(51) Int. Cl.: A47J 31/20

(54) **APPARATUS FOR MAKING BEVERAGES**
GERÄT ZUM ZUBEREITEN VON GETRÄNKEN
APPAREIL DE PREPARATION DE BOISSONS

(30) Priority: 15.03.2000 GB 0006120; 12.05.2000 GB 0011348
(43) Date of publication of application: 02.01.2003
(73) Proprietor: WILLIAM LEVENE LIMITED, Middlesex, HA2 7JP (GB)
(72) Inventor: HIGHAM, John, c/o William Levene Limited, Harrow, Middlesex HA2 7JP (GB); CONRAN, Sebastian, Conran & Partners, London SE1 2YU (GB)
(74) Representative: Jennings, Nigel Robin
(86) International application number: PCT/GB2001/001133
(87) International publication number: WO 2001/067935

(56) References cited:
- BE-A- 386 545
- DE-C- 3 432 289
- GB-A- 2 104 400
- US-A- 3 927 608
- US-A- 5 887 510

## Description

The present invention relates to apparatus for making beverages used particularly, but not exclusively, for making tea or coffee.

The invention has application when the tea or coffee is made from infusion material such as tea leaves or coffee grinds respectively using a "cafetière" method.

Conventional "cafetière" style apparatus does not prevent the coffee grinds or tealeaves from stewing when the plunger of the apparatus has been depressed. This is especially true when the apparatus is used in the making of tea from tea leaves. Stewed tea is generally unpleasant to drink.

Further, conventional "cafetière" style plungers have unreliable seals between the inside wall of the beaker of the "cafetière" apparatus and the plunger. This results in coffee grinds or tea leaves escaping past the plunger and remaining in the coffee or tea for drinking.

Still further, conventional "cafetière" style apparatus can be difficult to clean once the plunger has been depressed and the coffee or tea has been drunk. The apparatus is difficult to clean because the tea leaves/coffee grinds can adhere to the inside wall of the beaker of the apparatus.

US3927608 discloses a beverage making device in which a cover and sealing rings are affixed to a plunger assembly and liquid is filtered through notches in the sealing rings as the plunger is plunged through liquid to be filtered.

According to the present invention there is provided apparatus for making beverages, the apparatus comprising: a beaker for holding a liquid and material to be infused; a plunger assembly comprising a filter for filtering the material to be infused from the liquid, the filter having sealing means sealing against the wall of the beaker to define, within the beaker, a space beneath the filter which in use contains the infusion material and a space above the filter which in use contains the filtered liquid; and isolating means, comprising a cover disposed on the plunger assembly substantially adjacent the filter, and characterized in that the cover is provided with a biasing means arranged to bias the cover away from the filter during filtering of the liquid, and arranged to bias the cover towards the filter once the liquid has been filtered, to form a sealing contact between the filter and cover for isolating the space beneath the plunger assembly from the space above the plunger assembly to prevent further infusion taking place.

Preferably, the filter includes an abutment rim with which the cover forms the sealing contact during use thereof.

Preferably, the sealing means is biased toward the wall of the beaker.

Preferably, the sealing member is a downwardly extending skirt seal.

Alternatively, the sealing member is formed of first and second circular rings.

Preferably, the first and second circular rings each have a slit which, when in place in the apparatus, is diametrically opposed with respect to the other.

Alternatively, the sealing member is in the form of an open circular ring, the end portions of which overlap in such a way as to form a seal, and to allow the end portions to slide over one another.

Alternatively, the sealing member is in the form of a ring having a generally rectangular cross section, which fits within a generally U-shaped circumferential channel.

Alternatively, the sealing member is in the form of a circular ring which is biased toward the wall of the beaker.

Preferably, the bias is provided by a circular spring member which is generally J-shaped in cross section, the resilience of the spring member acting to bias the circular ring radially outwardly against the inside of the beaker wall.

Preferably, the notches are cut into the inside circumferential edge of the circular ring.

Preferably, the apparatus further includes a collector adapted to be removeably attached to the plunger assembly.

Preferably, the isolating means includes a cover which is biased toward a position which isolates the space beneath the filter from the space above the filter.

Embodiments of the present invention will now be described, by way of example only, with reference to the accompanying drawings, in which:
Fig. 1 is a cross-sectional view of the beverage making apparatus of a first aspect of the present invention, the plunger being in the plunged position;
Fig. 2 is a cross-sectional view of the plunger of Fig. 1;
Fig. 3 is an elevational view of the plunger of Figs 1 and 2;
Fig. 4 is a cross-sectional view of the plunger of Figs 1 to 3 being in a first position, before plunging, in a beaker being part of the apparatus of Fig. 1, shown schematically;
Fig. 5 is a cross-sectional view corresponding to Fig. 4, the plunger being in an intermediate position;
Fig. 6 is a cross-sectional view corresponding to Figs 4 and 5, the plunger being in a plunged position;
Fig. 7 is a cross-sectional view of the beverage making apparatus of a second aspect of the present invention, the plunger being in the plunged position and a seal forming part of the beverage making apparatus being in place between the inner wall of a beaker and the plunger;
Fig. 8 is a detail view of the seal of Fig. 7;
Fig. 9 is an exploded view of the plunger of Fig. 7;
Figs 10 to 12 show another embodiment of the beverage making apparatus of the first aspect of the present invention using a different sealing means; and
Fig. 13 is a cross sectional, elevational part view of another embodiment of the beverage making apparatus of the first aspect of the present invention, using another sealing means and also illustrating a tea leave/coffee grind collector.

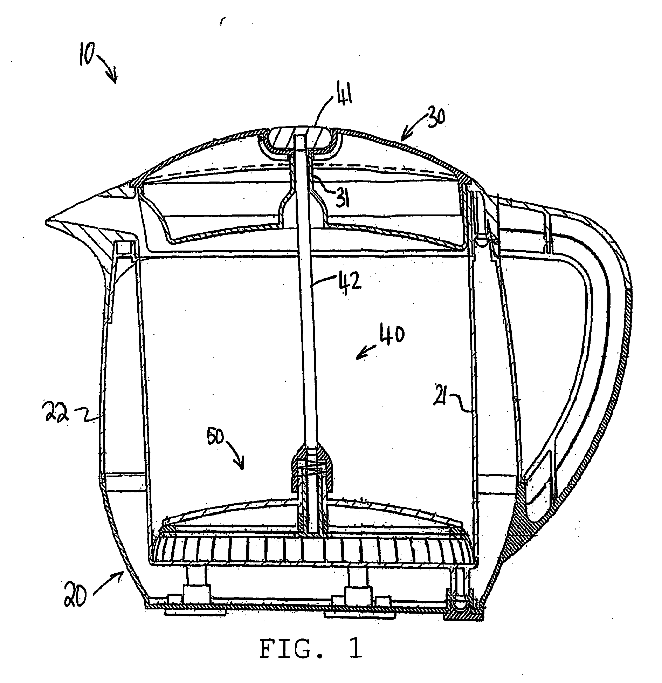

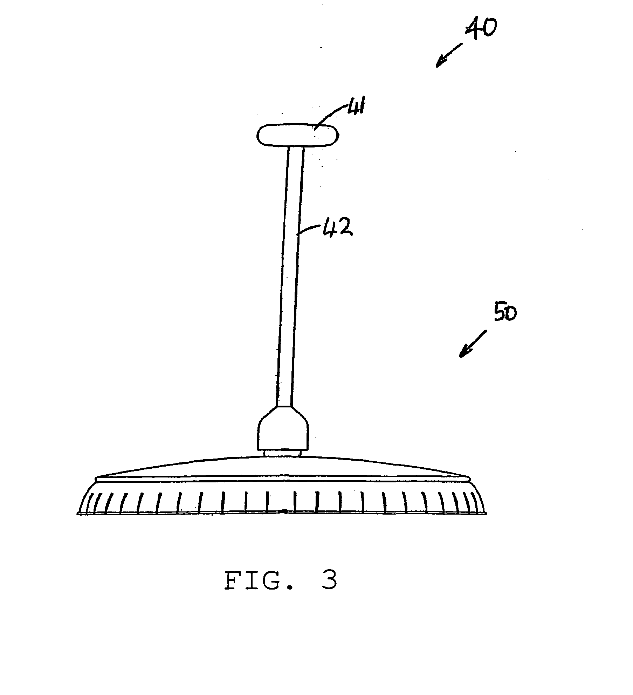

Referring to the drawings, Figs 1 to 6 illustrate beverage making apparatus 10 made in accordance with a first aspect of the present invention. The beverage making apparatus 10 has a container 20, a lid 30 and a plunger assembly 40.

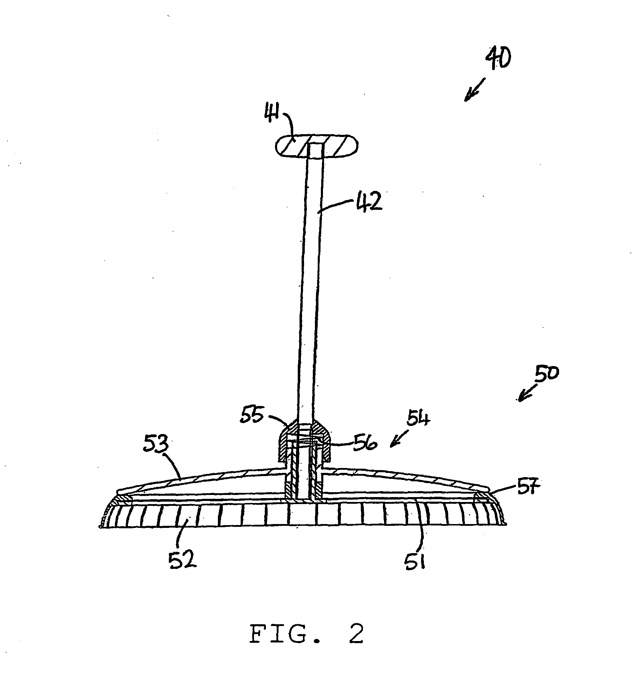

The container 20 is in the form of a generally cylindrical beaker 21 fixed inside an outer shell 22 in the form of a teapot. The lid 30 fits into the open end of the beaker 21. The plunger assembly 40 (as is best seen in Fig. 2) includes a handle 41, a stem 42 connected at one end to the handle 41 and at the other end to a filtering and sealing unit 50 of the plunger assembly 40, the plunger assembly 40 fitting within the beaker 21. The stem 42 is received through an aperture 31 in the lid 30.

The filtering and sealing unit 50 includes a filter 51, in the form of a gauze or mesh; a beaker wall seal 52 between the filter 51 and the inside wall of the beaker 21; and an isolating system 54.

The isolating system 54 includes a cover 53 which covers the filter 51 and is disposed between the filter 51 and a stop collar 55. A compression spring 56 is fitted between the stop collar 55 and the cover 53 such that in use, the force exerted by the spring 56 on the cover 53 pushes the cover 53 towards the filter 51 forming an isolating seal at the outer rim of the cover 51 where it contacts an abutment rim 57 formed around the outer edge of the filter 51.

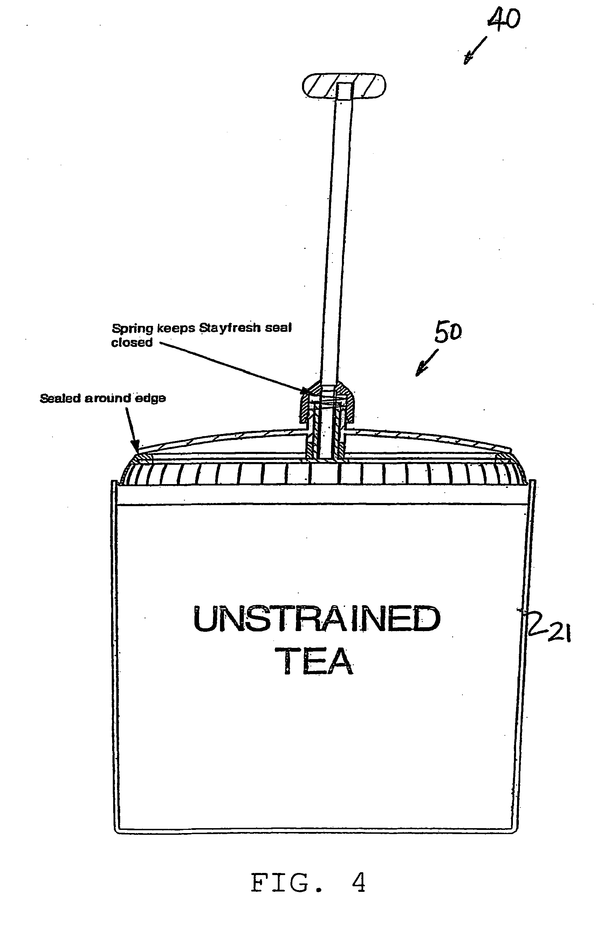

In use, (as best seen in Figs. 4 to 6) material to be infused, such as tea leaves or coffee grinds is placed in a beaker 21 together with the appropriate quantity of liquid (generally water). The plunger assembly 40 is then located into the open end of the beaker 21. Before plunging commences, the beaker wall seal 52 forms a seal between the inside wall of the beaker 21 and the filter 51 and the cover 54 is urged towards the abutment rim 57 by way of the isolating system 54.

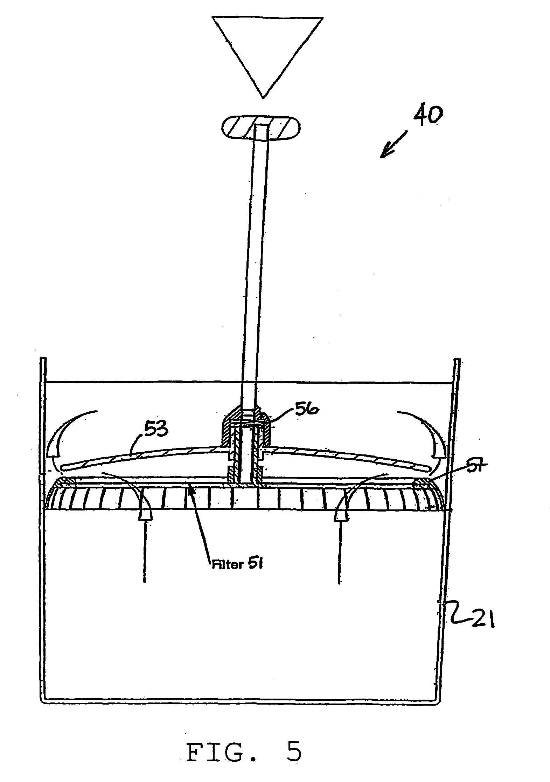

As is best seen in Fig. 5, as the plunger assembly 40 is pushed through the unfiltered liquid, the force of the movement of the liquid passing through the filter 51 and against the cover 53 causes the cover 53 to push against and thus compress the spring 56, this allows the cover 53 to move away from the filter 51, allowing the filtered liquid to pass between the cover 53 and the rim 57. The beaker wall seal 52 prevents any tea leaves or coffee grinds from passing from the unfiltered liquid to the filtered liquid which has passed through the filter 51.

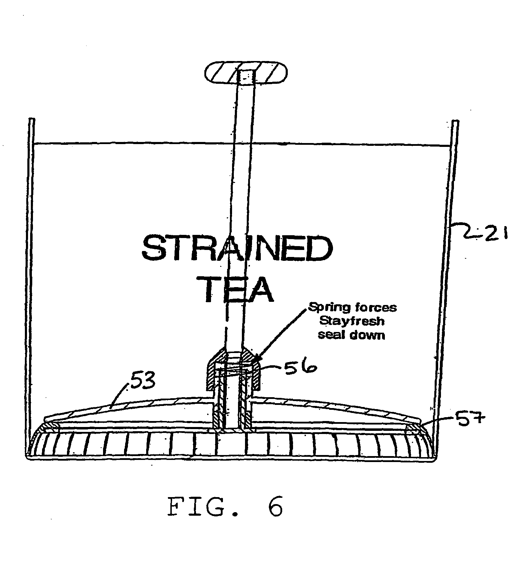

As is best seen in Fig. 6, when the plunging assembly 40 has been plunged and comes to rest, the operation has resulted in filtered liquid in the a space above the filter 51 and the infused tea leaves/coffee grinds in a space below the filter 51.

With the plunger assembly 40 at rest, there is no movement of liquid through the filter 51 and thus no resulting force is produced to act on the cover 53 and the spring 56 forces the cover 53 back towards the filter 51, making the connection between the cover 53 and the rim 57.

The effect of the isolating unit is the complete isolation of the infused tea leaves/coffee grinds below the plunger assembly 40 from the filtered liquid above the plunger assembly 40, thus preventing stewing.

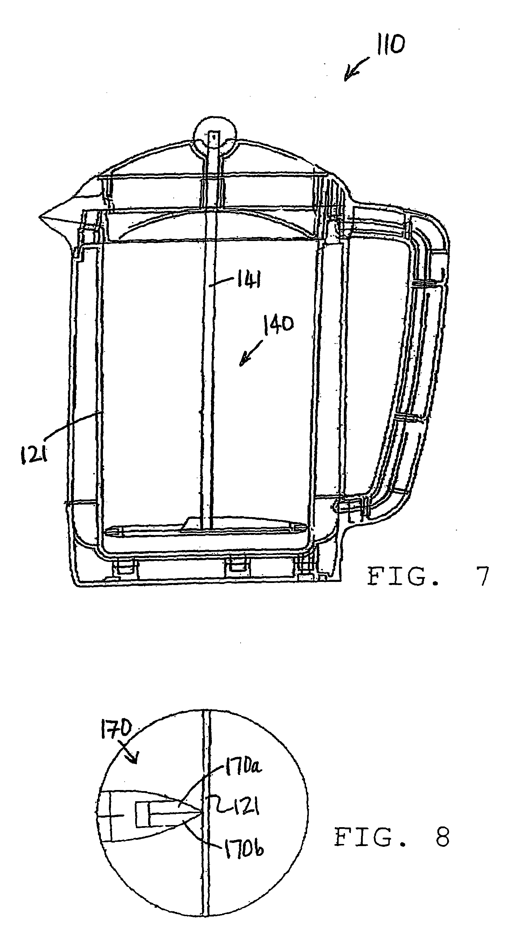

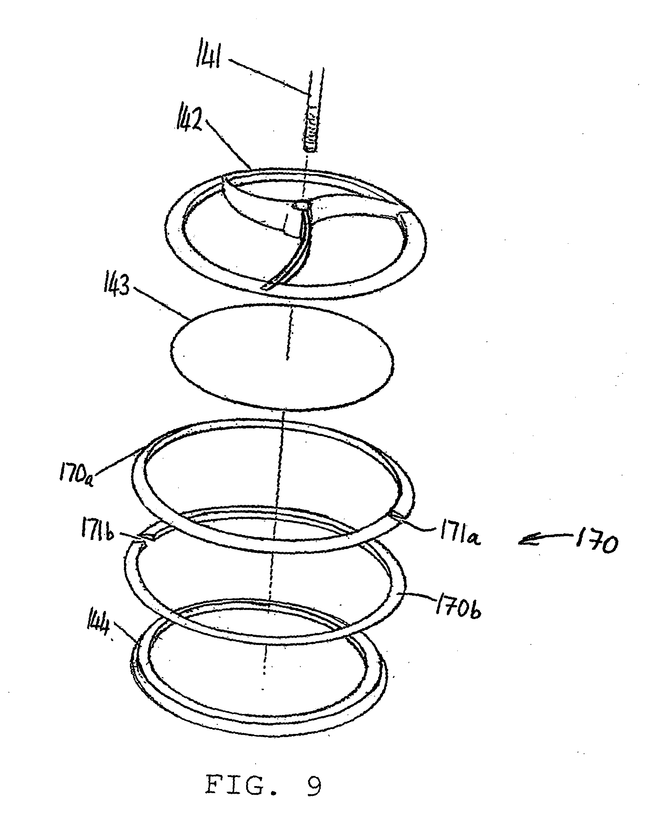

Figs 7 to 9 illustrate a second aspect of the present invention of beverage making apparatus 110. The apparatus 110 has a plunger assembly 140 comprising a plunger 141, carrying at its lower end a filter frame 142 having a filter 143, a filter retainer 144 and a beaker wall seal assembly 170. The beaker wall seal assembly 170 is in the form of first and second circular rings 170a and 170b respectively. The rings are formed of flexible plastics material and each is provided with a slit 171a and 171b respectively. When positioned within the plunger assembly 140 the slits 171a and 171b are positioned such that they are not in line with one another so that there is always at least one ring 170a or 170b forming a seal at all locations around the filter 51. Preferably, the slits 171a and 171b are positioned diametrically opposite one another.

The slits 171a and 171b also fulfil the function that if the beaker 121 narrows, the rings 170a and 170b can elastically distort into the space defined by the slit 171a and 171b whilst still forming a seal and allowing the plunger assembly 140 to progress through the beaker, even when the diameter of the beaker narrows.

The rings 170a and 170b have triangular profiles such that when the rings 170a and 170b are brought together in the plunger assembly 140, they define a point which comes into contact with the inside wall of the beaker 121.

In an alternative, the rings 170a and 170b have rectangular profiles.

In a further embodiment, not shown, the beaker wall seal is generally in the form of an open circular ring of elastic plastics material, the end portions of which overlap in such a way as to form a seal and to allow the ends to slide over one another generally permitting a change in perimeter measurement of the seal corresponding to any changes in the diameter of the beaker.

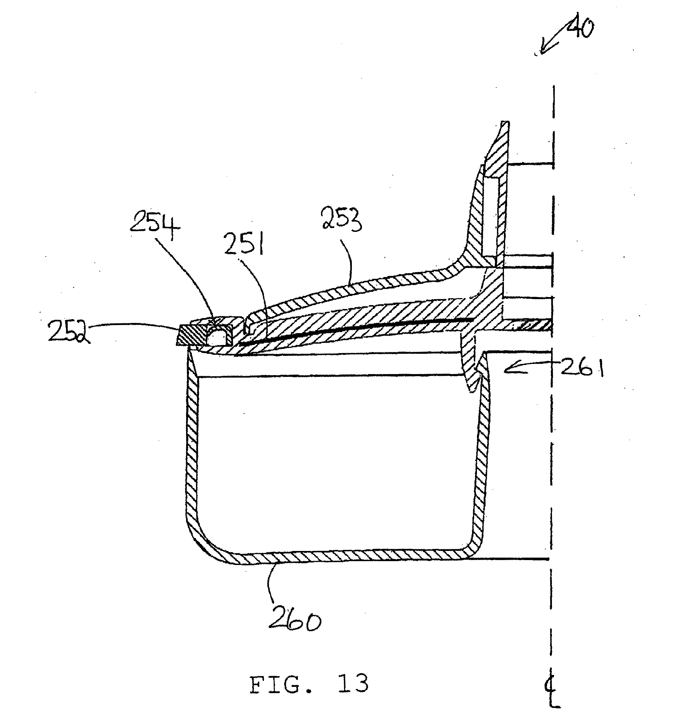

In another further embodiment, illustrated in Fig. 13, the beaker wall seal is in the form of a circular plastics ring 252 which is fitted between the filter 251 and the inside of the beaker wall. The ring 252 is biased toward the inside of the beaker wall by a circular spring member 254, which is located between the ring 252 and the filter 251, and is in the form of a generally J-shaped (in cross section) soft silicon ring. The resilience of the silicon ring 259 acts to bias the ring 252 radially outwardly against the inside of the beaker wall.

The ring 252 has notches cut from the inside circumferential edge to assist in the ring's ability to increase and decrease in circumference so that the seal can follow the contours of the inside wall of the beaker and maintain the seal.

In this embodiment, there is also illustrated a tea leaf/coffee grind collector 260. The collector fits within the beaker, and has a connecting clip 261 which is adapted to removeably attach the collector 260 to the plunger assembly 40 such that in use, the plunger assembly 40 is pushed towards the collector 260 whilst straining the liquid, the plunger assembly 40 then connects with the collector 260, by way of the connecting clip 261, when the straining is complete. The collector 260 then retains the tea leaves/coffee grinds and the plunger assembly 40 (with the collector 260 attached) can be removed from the beaker for easy cleaning of the collector 260, once disconnected from the plunger assembly 40.

Whilst only one half of the apparatus is shown in Fig. 13, it is to be understood that the other half of the apparatus is symmetrical.

It is also envisaged that before placing the collector 260 in the bottom of the beaker, and before adding the liquid to the beaker, the collector 260 could be filled (or pre-packaged) with the tea leaves or coffee grinds.

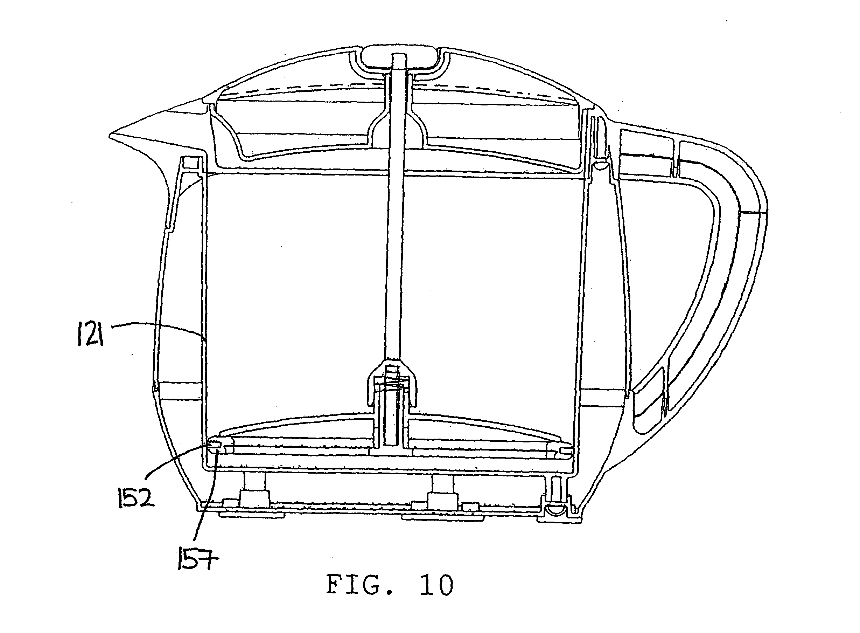

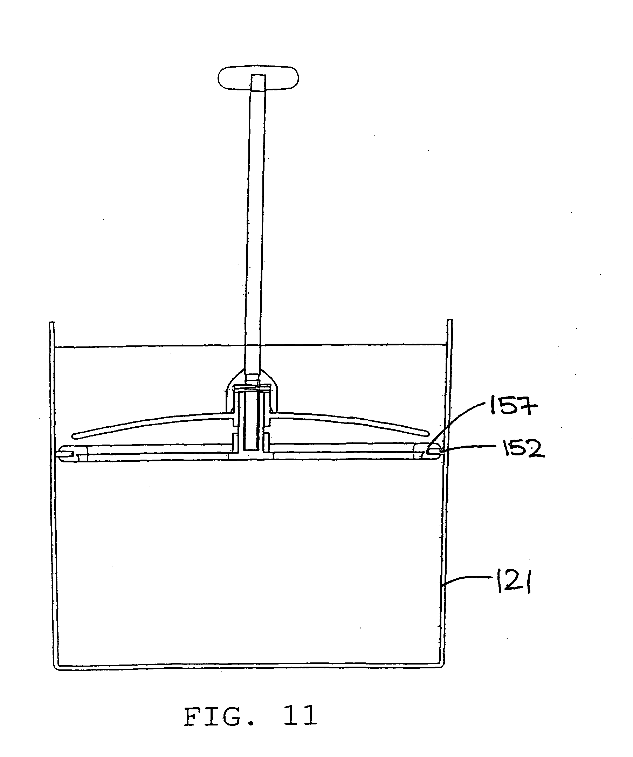

In another embodiment, shown in figs 10 to 12, there is illustrated beverage making apparatus similar to that described above but differing in that the beaker wall seal 152 is in the form of a ring having a generally rectangular cross-section and which fits within a generally U-shaped circumferential channel in the rim 157.

The beaker wall seal 152 forms a seal between the rim 157 and the inside wall of the beaker 121.

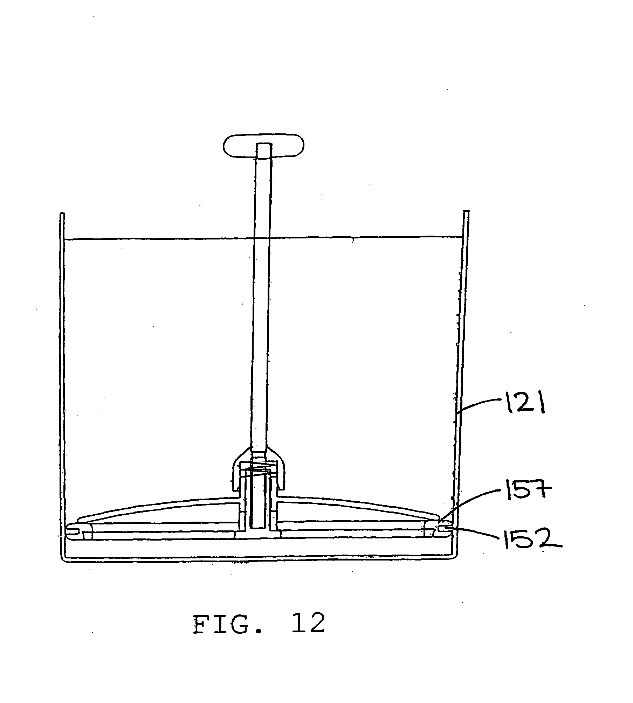

In this embodiment, the beaker wall seal 152 is compressible to correspond to changes in the diameter of the beaker. Fig. 12 illustrates the beaker wall seal 152 in the fully compressed state, being located at the relatively smaller diameter location of the beaker.

Modifications and improvements may be made to the foregoing without departing from the scope of the present invention.

## Claims

1. Apparatus (10; 110) for making beverages, the apparatus comprising: a beaker (21; 121) for holding a liquid and material to be infused; a plunger assembly (40; 140) comprising a filter (51; 143; 251) for filtering the material to be infused from the liquid, the filter having sealing means (52; 170; 252) sealing against the wall of the beaker to define, within the beaker, a space beneath the filter which in use contains the infusion material and a space above the filter which in use contains the filtered liquid; and isolating means (54), comprising a cover (53) disposed on the plunger assembly substantially adjacent the filter, and **characterized in that** the cover is provided with a biasing means (56) arranged to bias the cover away from the filter during filtering of the liquid, and arranged to bias the cover towards the filter once the liquid has been filtered, to form a sealing contact between the filter and cover for isolating the space beneath the plunger assembly from the space above the plunger assembly to prevent further infusion taking place.

2. Apparatus according to Claim 1, wherein the filter (51; 143; 251) includes an abutment rim (57) with which the cover (53) forms the sealing contact during use thereof.

3. Apparatus according to either preceding claim, wherein the sealing means (52; 170; 252) is biased toward the wall of the beaker (21; 121).

4. Apparatus according to any preceding claim, wherein the sealing member (52) is a downwardly extending skirt seal.

5. Apparatus according to any one of Claims 1 to3, wherein the sealing means (170) is formed of first (170a) and second (170b) circular rings.

6. Apparatus according to Claim 5, wherein the first and second circular rings each have a slit (171a, 171 b) which, when in place in the apparatus, is diametrically opposed with respect to the other.

7. Apparatus as claimed in any one of Claims 1 to 3, wherein the sealing means is in the form of an open circular ring, the end portions of which overlap in such a way as to form a seal, and to allow the end portions to slide over one another.

8. Apparatus as claimed in any one of Claims 1 to 3, wherein the sealing means is in the form of a ring having a generally rectangular cross section, which fits within a generally U-shaped circumferential channel.

9. Apparatus as claimed in any one of Claims 1 to 3, wherein the sealing means (252) is in the form of a circular ring which is biased toward the wall of the beaker.

10. Apparatus as claimed in Claim 9, wherein the bias is provided by a circular spring member (254) which is generally J-shaped in cross section, the resilience of the spring member acting to bias the circular ring (252) radially outwardly against the inside of the beaker wall.

11. Apparatus as claimed in either one of Claims 9 or 10, wherein notches are cut into the inside circumferential edge of the circular ring (252).

12. Apparatus as claimed in any preceding claim, further including a collector (260) adapted to be removeably attached to the plunger assembly (40; 140).

## Patentansprüche

1. Vorrichtung (10; 110) zur Zubereitung von Getränken, wobei die Vorrichtung aufweist: einen Becher (21; 121) zur Aufnahme einer Flüssigkeit und von Substanz, welche auszulaugen ist; ein Pressstempelbauteil (40; 140) welcher einen Filter (51; 143; 251) zum Filtern der Substanz, die von der Flüssigkeit auszulaugen ist, aufweist, wobei der Filter Abdichtungsmittel (52; 170; 252) zur Abdichtung gegenüber einer Becherwandung aufweist, um innerhalb des Bechers einen Raum unterhalb des Filters, der bei Benutzung die Auslaugsubstanz beinhaltet und einen Raum oberhalb des Filters, der bei Benutzung die gefilterte Flüssigkeit beinhaltet abzugrenzen; und Abschlussmittel (54), welche eine auf dem Pressstempelbauteil im Wesentlichen an den Filter angrenzend angeordnete Abdeckung (53) aufweisen, **dadurch gekennzeichnet, dass** die Abdeckung mit einem Spannmittel (56) ausgestattet ist, welches angeordnet ist, um die Abdeckung während der Filterung der Flüssigkeit vom Filter weg zu spannen, und so angeordnet ist, dass die Abdeckung zum Filter hin gespannt wird, sobald die Flüssigkeit gefiltert wurde, um einen abdichtenden Kontakt zwischen Filter und Abdeckung zu bilden, und um den Freiraum unter dem Pressstempelbauteil von dem Freiraum über dem Pressstempelbauteil zu trennen, und damit ein weiteres Auslaugen zu verhindern.

2. Vorrichtung nach Anspruch 1, wobei der Filter (51; 143; 251) einen Auflagerand (57) beinhaltet, mit dem die Abdeckung (53) den Abdichtungskontakt während der Benutzung herstellt.

3. Vorrichtung nach einem der vorhergehenden Ansprüche, wobei das Abdichtungsmittel (52; 170; 252) zur Wand des Bechers (21; 121) hin vorgespannt ist.

4. Vorrichtung nach einem der vorhergehenden Ansprüche, wobei das Abdichtungselement (52) eine sich nach unten ausdehnende Schürzendichtung ist.

5. Vorrichtung nach einem der Ansprüche 1 bis 3, wobei das Abdichtungsmittel (170) aus ersten (170a) und zweiten (170b) Kreisringen gebildet wird.

6. Vorrichtung nach Anspruch 5, wobei der erste und der zweite Kreisring je einen Schlitz (171a, 171b) aufweisen, der, wenn er in der Vorrichtung an seinem Platz angeordnet ist, dem Anderen diametral gegenüber liegt.

7. Vorrichtung nach einem der der Ansprüche 1 bis 3, wobei das Abdichtungsmittel in Form eines offenen Kreisringes vorliegt, dessen Endstücke solcherart überlappen, um eine Abdichtung zu bilden, und um den Endstücken zu ermöglichen, übereinander zu gleiten.

8. Vorrichtung nach einem der Ansprüche 1 bis 3, wobei das Abdichtungsmittel in Form eines Ringes mit einem im Wesentlichen rechteckigen Querschnitt vorliegt, welcher in eine im Wesentlichen U-förmige umlaufende Nut passt.

9. Vorrichtung nach einem der Ansprüche 1 bis 3, wobei das Abdichtungsmittel (252) in Form eines Kreisrings vorliegt, welcher gegen die Wand des Bechers vorgespannt ist.

10. Vorrichtung nach Anspruch 9, wobei die Vorspannung durch einen kreisförmigen Federbauteil (254) gegeben ist, der im Wesentlichen einen J-förmigen Querschnitt aufweist, und die Federkraft des Federbauteils wirkt, um den Kreisring (252) radial nach Außen, gegen die Innenseite der Becherwandung vorzuspannen.

11. Vorrichtung nach einem der Ansprüche 9 oder 10, wobei Kerben in den inneren umlaufenden Rand des Kreisringes (252) geschnitten sind.

12. Vorrichtung nach einem der vorhergehenden Ansprüche, welcher weiters einen Auffänger (260) beinhaltet, welcher geeignet ist, um entfernbar an dem Pressstempelbauteil (40; 140) befestigt zu sein.

## Revendications

1. Appareil (10; 110) pour fabriquer des boissons, l'appareil comprenant: un gobelet (21; 121) pour contenir un liquide et une matière à infuser; un assemblage plongeur (40; 140) comprenant un filtre (51; 143; 251) pour filtrer la matière à infuser hors du liquide, le filtre comprenant des moyens d'étanchéité (52; 170; 252) assurant une étanchéité contre la paroi du gobelet afin de définir, à l'intérieur du gobelet, un espace en dessous du filtre qui, lors de l'utilisation, contient la matière d'infusion, et un espace au-dessus du filtre qui, lors de l'utilisation, contient le liquide filtré; et des moyens d'isolation (54), comprenant un couvercle (53) disposé sur l'assemblage plongeur sensiblement à proximité du filtre, et **caractérisé en ce que** le couvercle comporte des moyens de poussée (56) arrangés pour pousser le couvercle à l'écart du filtre pendant le filtrage du liquide, et arrangés pour pousser le couvercle en direction du filtre une fois que le liquide a été filtré, pour former un contact étanche entre le filtre et le couvercle afin d'isoler l'espace situé en dessous de l'assemblage plongeur par rapport à l'espace situé au-dessus de l'assemblage plongeur dans le but d'empêcher que l'infusion ne se prolonge.

2. Appareil selon la revendication 1, dans lequel le filtre (51; 143; 251) comprend un bord de butée (57) avec lequel le couvercle (53) forme le contact d'étanchéité pendant l'utilisation de celui-ci.

3. Appareil selon l'une quelconque des revendications précédentes, dans lequel les moyens d'étanchéité (52; 170; 252) sont poussés en direction de la paroi du gobelet (21; 121).

4. Appareil selon l'une quelconque des revendications précédentes, dans lequel l'élément d'étanchéité (52) est un joint à collerette s'étendant vers le bas.

5. Appareil selon l'une quelconque des revendications 1 à 3, dans lequel les moyens d'étanchéité (170) sont constitués d'un premier (170a) et d'un deuxième (170b) anneaux circulaires.

6. Appareil selon la revendication 5, dans lequel les premier et deuxième anneaux circulaires comportent chacun une fente (171a, 171b) qui, une fois en place dans l'appareil, est diamétralement opposée par rapport à l'autre.

7. Appareil selon l'une quelconque des revendications 1 à 3, dans lequel les moyens d'étanchéité se présentent sous la forme d'un anneau circulaire ouvert, dont les parties d'extrémités se chevauchent de manière à former un joint et à permettre aux parties d'extrémité de glisser l'une sur l'autre.

8. Appareil selon l'une quelconque des revendications 1 à 3, dans lequel les moyens d'étanchéité se présentent sous la forme d'un anneau présentant une section transversale essentiellement rectangulaire, qui s'adapte à l'intérieur d'un canal circonférentiel essentiellement en forme de U.

9. Appareil selon l'une quelconque des revendications 1 à 3, dans lequel les moyens d'étanchéité (252) se présentent sous la forme d'un anneau circulaire qui est poussé en direction de la paroi du gobelet.

10. Appareil selon la revendication 9, dans lequel l'action de poussée est réalisée par un élément circulaire faisant ressort (254) présentant une section transversale essentiellement en forme de J, l'élasticité de l'élément faisant ressort agissant pour pousser l'anneau circulaire (252) radialement vers l'extérieur contre l'intérieur de la paroi du gobelet.

11. Appareil selon la revendication 9 ou 10, dans lequel des encoches sont découpées dans le bord circonférentiel intérieur de l'anneau circulaire (252).

12. Appareil selon l'une quelconque des revendications précédentes, comprenant en outre un collecteur (260) adapté pour être attaché d'une façon détachable à l'assemblage plongeur (40; 140).
